# EUROPEAN PATENT APPLICATION

(11) **EP 1 953 886 A2**
(43) Date of publication of application: **06.08.2008**
(21) Application number: 08100625.6
(22) Date of filing: 18.01.2008
(51) Int. Cl.: H02G 3/08, H02G 3/12

(54) **Box for wall mounting electrical apparatuses**

(30) Priority: 05.02.2007 IT RM20070052
(71) Applicant: BTICINO S.P.A., 20154 Milano (IT)
(72) Inventor: Sensi, Lucio, I-21040, Venegono Superiore - Varese (IT); Roncato, Danilo, I-21049, Tradate - Varese (IT)
(74) Representative: Carangelo, Pierluigi

(57) **Abstract**

A box (1) for an electrical equipment, comprising a side wall (3a, 3b, 3c, 3d), and a bottom wall (4) jointed to the side wall (3a, 3b, 3c, 3d), the side wall (3a, 3b, 3c, 3d) surrounding a box inlet port (2) and defining along with the bottom wall (4) an inner space (5) cooperating with said port (2), at least one of the bottom wall (4) and/or the side wall (3a, 3b, 3c, 3d) including passage means (R1, R2, R3) adapted to allow the passage of tubes and/or electrically conductive cables between the box outer and the inner parts.

The passage means comprise at least one coupling region (R1, R2, R3) of said at least one wall (3a, 3b, 3c, 3d) consisting of at least one comb of flexible tongues (Lu1, ..., LuN, Ld1, ..., LdN) and having a free end portion (11) and an opposite end portion (10) constrained to the remaining part of said wall (3a, 3b, 3c, 3d), the tongues being independently flexible one to the other in order to define, in said coupling region, through openings adapted to allow the passage and the holding of said tubes and/or conductive cables.

## Description

The present invention relates to the technical field of electrical installations in houses and offices and, more particularly, it relates to a box for wall mounting electrical apparatuses as defined in the preamble of the first claim.

To the purposes of the present description, by electrical apparatus is meant, in general, any electrical means or device which is part of electrical installations in civil buildings and the like, and usually intended to be mounted, for example flush-mounted, against walls or panels of such buildings.

As is known, most of the above-mentioned electrical equipment is usually wall mounted using composite mounting structures, or part assemblies, generally including:
- a box intended to be flush-installed against a wall;
- an electrical equipment-mounting (or support) frame securable to the box; and
- a covering plate removably securable to the frame.

The boxes of the above-indicated type, typically made in rigid synthetic plastic material, are generally known and broadly diffused. As is known, it is necessary that such boxes allow the passage of tubes between the box inner and the outer parts. Virtually, such tubes are intended to house electrical cables intended to be connected to the electrical apparatus to be installed against wall by means of the box. For this reason, in the boxes of the prior art, in order to allow the passage of tubes between the box inner and the outer parts, prefractured wall portions intended to be selectively removed by the installers, so as to form through openings in the box walls, are provided in the box walls. The removal of such prefractured wall portions typically occurs by employing mechanical tools, or manually.

However, it often happens that the installers are forced not only to remove the prefractured wall portions, but also to radically change, by means of scissors or cutters, the shape of the openings resulting from the removal of the prefractured wall portions in order to allow the passage of tubes the diameter of which is not compatible with the dimensions of such through openings. Furthermore, it often happens that the installers tear the box walls when the number of the through openings which can be obtained by removing the prefractured wall portions is insufficient in relation to the installation needs. On the contrary, in the case that such through openings have dimensions which are higher than those of the tubes to be coupled to the box, further drawbacks occur. Virtually, in this cases the tubes are poorly efficiently hold by the box; furthermore, since the tubes cannot completely fill the through openings, an undesired seepage of construction materials inside the box can occur, in the event that this is installed in a masonry wall, or of dirt, in the event that the box is installed on a hollow wall, for example in plasterboard.

In the Italian utility model patent filed under the number IT 20991B/88, a box is described having, in addition to prefractured wall portions of the above-described type, also a bottom wall provided with an array of holes removably filled with a mosaic of small plates which are connected one to the other and to the bottom wall by means of tearable small bridges. By selectively removing a higher or lower number of small plates, it becomes possible, although to a predetermined extent, to customize the dimensions of the thus-obtained through openings to the diameter of the tubes to be coupled to the box. In this way, the box described in the above-indicated patent allows at least partially overcoming the cited above drawbacks of the prior art boxes.

Object of the present invention is to provide a box which, compared to the prior art boxes described above, has a superior ease of installation, a higher use flexibility, and is less affected by undesired seepages of construction materials or dirt inside the box.

Such object is achieved by a box as defined in the annexed first claim in the most general form thereof, and in the dependant claims in some particular embodiments.

The invention will be better understood from the following detailed description of embodiments thereof, which are given by way of example only and, therefore, are not limiting at all, with reference to the annexed Figures, in which:
- Fig. 1 shows an axonometric view of a particularly preferred embodiment of a box for wall mounting electrical apparatuses in accordance with the present invention;
- Fig. 2 shows a plan side view of the box in Fig. 1; and
- Fig. 3 shows a possible embodiment variation of the box in Fig. 1.

In the Figures, equal or similar elements will be indicated with the same reference numerals.

With reference to the Annexed Figures, a box for wall mounting standard civil electrical apparatuses - which are not shown, since they are conventional - is generally indicated with 1.

The box 1 can be, indifferently, intended both to be enclosed in a masonry wall, and intended to be enclosed in an opening which is obtained in a panel of a hollow wall, for example, in plasterboard. In the latter case, the box 1 can be provided with suitable means which are adapted to allow the securing of the box 1 to the panel, which means are per se well known to those skilled in the art, and for this reason are not shown in the Figures and not further described.

The box 1 comprises a box-shaped body, which is made, for example, in synthetic plastic material by moulding, having an inlet port 2, and formed by a side wall 3 extending around such port 2, and by a bottom wall 4 jointed to the side wall 3.

The side wall 3 and the bottom wall define an inner space 5 cooperating with the inlet port 2.

In the particular example shown, the port 2 and the bottom wall 4 have an essentially quadrangular shape, more precisely rectangular, and the side wall 3 includes four side walls which are approximately planar and two-by-two opposing 3a, 3c and 3b, 3d. In an embodiment variation not shown in the Figures, the box 1 could have the port 2 and the bottom wall 4 of an essentially circular shape; in this case, the side wall 3 would be a single continuous wall of an essentially cylindrical shape.

In the example, the box 1 is provided with holes or channels 6 for the securing of an equipment-mounting support frame, not shown in the Figures, to the box 1. A support frame, and the securing modes of such frame to a box 1, have belonged for a long time to the knowledge of those skilled in the art and, for this reason, they will be not further detailed in the present description.

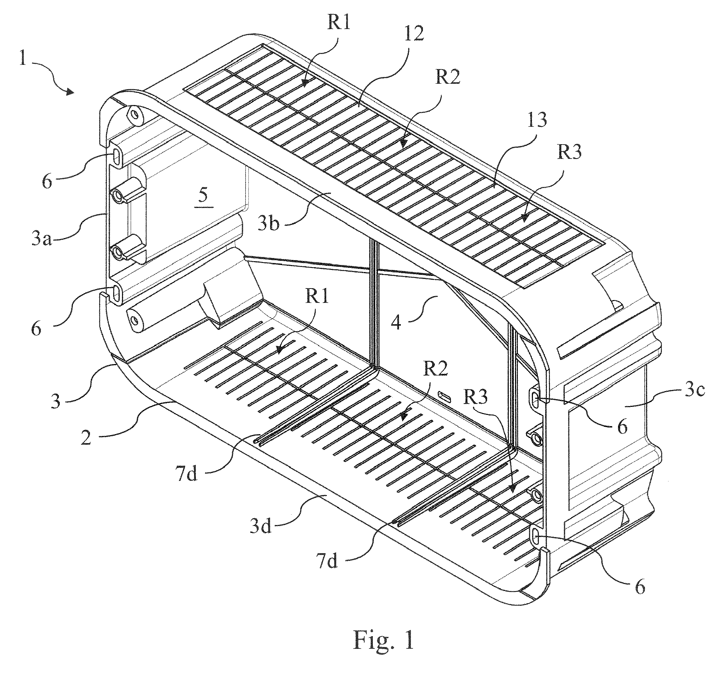

In a feasible non limiting embodiment, the box 1 is provided with at least one pair of ribs 7d arranged on opposite walls 3d, 3b and extended parallel and slightly projecting inside the space 5 in order to constitute receiving guides of a partition wall (not shown in the Figure) of the space 5. In the Figure 1, only two ribs 7d are visible on the side wall 3d. Ribs opposite and parallel to these are provided on the wall 3b, but they are not visible in the Figure. Therefore, in the example, the box in Fig. 1 includes two pairs of ribs 7d.

In the box 1 illustrated in the Figures, two opposite side walls 3d, 3b are equipped with means R1, R2, R3 adapted to allow the passage of tubes and/or electrically conductive cables between the box 1 outer and inner parts, in order to couple such tubes and/or conductive cables to the box 1. The tubes and/or cables are not illustrated in the Figures, since well known to those skilled in the art. For example, the tubes can be standard corrugated tubes of the type widely used in the electrical installations of civil buildings.

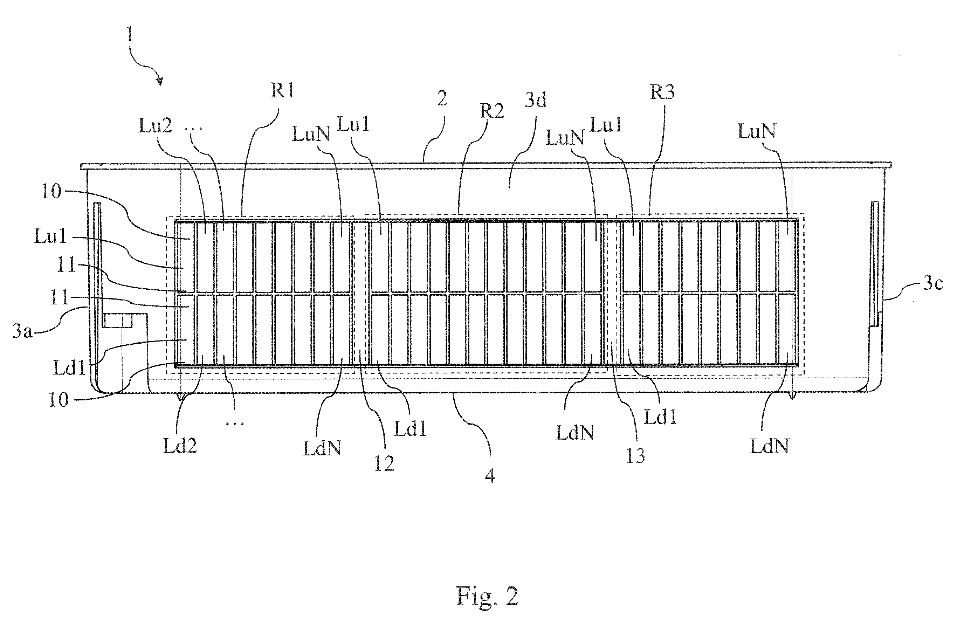

The passage means R1, R2, R3 are shown more in detail in the Figure 2, in which only the side wall 3d is illustrated. The passage means R1, R2, R3 of the side wall 3b are completely similar in the example.

Advantageously, such passage means R1, R2, R3 comprise at least one coupling region R1, R2, R3 of the wall 3d consisting of at least one comb of flexible tongues Lu1, ..., LuN, Ld1, ..., LdN. Preferably, the tongues are mutually parallel inside a comb.

The tongues Lu1, ..., LuN, Ld1, ..., LdN have a free end portion and an opposite end portion constrained to the remaining part of the wall 3d. For example, it shall be noticed in the Figure 2 that the tongue Lu1 of the region R1 has a free end portion 11 and an opposite end portion 10 constrained to the wall 3d.

In the particularly preferred embodiment illustrated in the Figures, but not for this to be intended as limiting, the side wall 3d includes three coupling regions R1, R2, R3 of the above-indicated type. Virtually, it shall be noticed in the Figure 2 that such regions R1, R2, R3 occupy on the whole an extensive portion of the wall 3d.

In a particularly advantageous embodiment, as shown in Figure 2, each coupling region R1, R2, R3 includes first and second combs , mutually parallel and opposed. For example, it shall be noticed in the Figure 2 that the region R1 includes a first comb, or upper comb, of tongues Lu1, ..., LuN, and a second opposite comb, or lower comb, of tongues Ld1, ..., LdN. The two combs are virtually arranged so that the free end portions 11 of the upper comb tongues Lu1, ..., LuN are in a proximity relationship with the free end portions 11 of corresponding tongues of the lower comb Ld1, ..., LdN.

Inside each comb, the tongues Lu1, ..., LuN, Ld1, ..., LdN are independently flexible one to the other in order to define, in the coupling region, through openings adapted to allow the passage and the holding of the tubes and/or conductive cables. Virtually, the tongues Lu1, ..., LuN Ld1, ..., LdN are such as to be flexed when a tube or a conductive cable is coupled inside the box 2.

It shall be noticed that, according to the dimensions thereof, a tube to be coupled to the box 2 will require the inward flexion of a higher or lower number of tongues. Instead, the remaining tongues, also inside a same coupling region, will maintain their own rest position, so as to allow the coupling at these of further tubes or cables.

If the coupling of the tube or cable occurs from the outside of the box 1 outwardly, the tongues will flex outwardly in relation to the box 1. In the event that it is desired to avoid maintaining the tongues inwardly flexed inside the box 1 space 5, after the coupling of a tube or cable, by performing a reverse operation, it is possible to draw the tube or cable back to an extent sufficient to make so that the tongues are oriented towards the box 2 outer part, while maintaining the tube or cable still coupled to the box 1.

In a particularly advantageous embodiment, the tongues have a flexibility which varies along the prevailing extension direction thereof, so as to have a higher flexibility at the free end portion 11 thereof. For example, this can be obtained by causing the tongues to have a decreasing thickness when moving from the constrained end portion 10 thereof towards the free end portion 11 thereof.

In a particularly preferred embodiment, in the event that a same box wall 3d includes two or more coupling regions R1, R2, R3, it is possible to provide a continuous baffle 12, 13 between adjacent regions which is adapted to maintain the box 1 wall 3d stiffness. For example, as it shall be noticed in the Figure 2, a baffle 12 is sandwiched between the two adjacent coupling regions R1, R2, while between the two adjacent coupling regions R2, R3 a baffle 13 is provided. By co-ordinately observing the Figures 1 and 2, it shall be noticed that, in the event that the box is internally provided with the above-described ribs 7d, such ribs can be suitably arranged at the baffles 12, 13.

Therefore, according to what has been previously described, it is possible to understand how a box 1 in accordance with the present invention is such as to fully obviate the drawbacks cited above with reference to the prior art. In fact, it shall be noticed that, thanks to the provision of coupling regions of the above-described type, the box has a high flexibility compared to the number and dimensions of the tubes and/or cables which can be coupled thereto. The coupling can be carried out in a practical and quick manner, without virtually employing specific tools. Furthermore, it shall be noticed that the tongues, by adhering to the tubes and/or cables surfaces thanks to the flexibility thereof, considerably reduce the occurrence of undesired seepages of materials inside the box, compared to the prior art boxes.

Finally, it should be noticed that the tongues of the coupling regions also efficiently serve to hold the tubes coupled to the box during the positioning and installation manoeuvres of the box in hollow walls, for example in plasterboard. In fact, during such operations the tongues hold the tubes, for example the corrugated tubes, and prevent such tubes from withdrawing from the box and falling inside the hollow wall. Such fall is often particularly troublesome, because it could force an installer to perform long and difficult manoeuvres in order to retrieve the tubes or, in the worst case, to dismantle the wall.

Of course, those of ordinary skill in the art, to the aim of meeting specific, contingent needs, will be able to make a number of modifications and variations to the above-described box, all of which are also within the protection scope of the invention, as defined by the annexed claims.

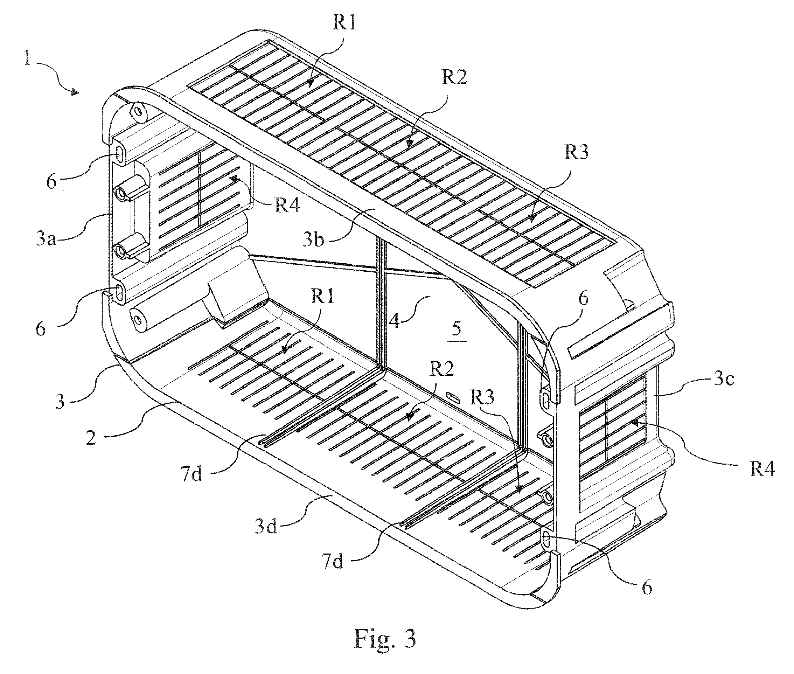

For example, it is possible to provide the coupling regions on the bottom wall 4 rather than on the side walls 3b, 3d, or concomitantly on the side walls and the bottom wall of the box. Similarly, it is possible to provide coupling regions of the above-described type in all, or only in some box side walls. In this regard, see the embodiment variation of Fig. 3, which has two further coupling regions R4 obtained on the side walls 3a and 3c compared to the box of Fig. 1.

## Claims

1. A box (1) for electrical apparatuses, comprising a side wall (3a, 3b, 3c, 3d), and a bottom wall (4) jointed to the side wall (3a, 3b, 3c, 3d), the side wall (3a, 3b, 3c, 3d) extending around a box inlet port (2) and defining, along with the bottom wall (4), an inner space (5) cooperating with said port (2), at least one (3a, 3b, 3c, 3d) of the bottom wall (4) and/or the side wall (3a, 3b, 3c, 3d) including passage means (R1, R2, R3) which are adapted to allow the passage of tubes and/or electrically conductive cables between the box outer and the inner parts,
**characterized in that**
the passage means comprise at least one coupling region (R1, R2, R3) of said at least one wall (3a, 3b, 3c, 3d) consisting of at least one comb of flexible tongues (Lu1, ..., LuN, Ld1, ..., LdN) and having a free end portion (11) and an opposite end portion (10) constrained to the remaining part of said wall (3a, 3b, 3c, 3d), the tongues being independently flexible relative to each other in order to define, in said coupling region, through openings that are adapted to allow the passage and the holding of said tubes and/or conductive cables.

2. The box (1) according to claim 1, wherein the tongues (Lu1, ..., LuN, Ld1, ..., LdN) are mutually parallel in such comb.

3. The box (1) according to any preceding claim, wherein the tongues (Lu1, ..., LuN, Ld1, ..., LdN) have a flexibility which varies along the prevailing extension direction thereof, so as to have a higher flexibility at the free end portion (11).

4. The box (1) according to claim 3, wherein the tongues (Lu1, ..., LuN, Ld1, ..., LdN) have a decreasing thickness when moving from the constrained end portion (10) towards the free end portion (11).

5. The box (1) according to any preceding claim, wherein said at least one comb includes first and second combs which are parallel and opposed relative to each other, the free end portions (11) of the tongues (Lu1, ..., LuN) of the first comb being in a proximity relationship with the free end portions (11) of corresponding tongues (Ld1, ..., LdN) of the second comb.

6. The box (1) according to any preceding claim, wherein said at least one coupling region (R1, R2, R3) includes first (R1) and second (R2) coupling regions that are adjacent one to the other and divided one from the other by a continuous baffle (12, 13) adapted to preserve the stiffness of said wall.

7. The box (1) according to claim 6, further including at least two opposite ribs (7d) extending parallel and slightly projecting inside the space (5) in order to be receiving guides of a partition wall of the space, at least one of said ribs (7d) being arranged at the continuous baffle (12).

8. The box (1) according to any preceding claim, wherein said coupling region (R1, R2, R3) includes a plurality of coupling regions which occupy on the whole a considerable part of said wall (3d).

9. The box (1) according to any preceding claim, wherein the port (4) is of an essentially quadrangular shape, and wherein the side wall includes four side walls (3a, 3b, 3c, 3d) two-by-two opposing, and wherein the passage means (R1, R2, R3) are provided in at least two opposite side walls.

10. The box (1) according to any preceding claim 1 to 8, wherein the port (4) is essentially circular.
